# EUROPÄISCHE PATENTANMELDUNG

(11) **EP 0 672 469 A1**
(43) Veröffentlichungstag der Anmeldung: **20.09.1995**
(21) Anmeldenummer: 95103286.1
(22) Anmeldetag: 08.03.1995
(51) Int. Cl.: B09B 3/00, C04B 20/02

(54) **Verfahren zur Aufbereitung von faserstoffhaltigen Materialien in einer Exzenter-Schwingmühle**

(30) Priorität: 19.03.1994 DE 4409445
(71) Anmelder: NIKKA Norddeutsche Isolierwerke GmbH Co. KG., D-30453 Hannover (DE)
(72) Erfinder: Gock, Eberhard, Prof. Dr.-Ing., D-38640 Goslar (DE); Florescu, Roman, D-38642 Goslar (DE); Betgovargez, Wiliamin, Dipl.-Min., D-38678 Clausthal-Zellerfeld (DE)
(74) Vertreter: Cohausz & Florack

(57) **Zusammenfassung**

In einem Verfahren zur Aufbereitung von natürlichen und/oder synthetischen, anorganischen oder organischen Faserstoffen und faserstoffhaltigen Materialien wird das aufzubereitende Material in einer Exzenter-Schwingmühle trocken vermahlen.

## Beschreibung

Die Erfindung betrifft ein Verfahren zur Aufbereitung von natürlichen und/oder synthetischen, anorganischen oder organischen Faserstoffen und faserstoffhaltigen Materialien durch Vermahlen.

Gemäß der in der DE-PS 43 32 031 beschriebenen Verfahrensweise werden dazu die Ausgangsmaterialien zunächst kaltversprödet, anschließend einer mehrstufigen trockenen Aufschlußmahlung und schließlich einer nassen Behandlung im Zentrifugalfeld unterzogen, um Faserfreiheit zu gewährleisten.

Dieses Verfahren bietet zwar hinsichtlich der Faserfreiheit des erhaltenen Produkts absolute Sicherheit, Vorsichtsmaßnahmen sind jedoch bei der Überführung des zu behandelnden Materials von der Stufe der trockenen Aufschlußmahlung in die Zentrifugalfeldbehandlung geboten, weil Faserfreiheit in dieser Verfahrensstufe noch nicht gegeben ist. Ferner erfordert die Überführung in die Zentrifugalfeld behandlung zusätzlichen sicherheitstechnischen, menschlichen oder maschinellen Arbeitsaufwand. Nachteilig bei diesem Verfahren ist ferner, daß das erhaltene Produkt nach Trocknung nicht mehr härtet.

Bisher war angenommen worden, daß das Vermahlen von faserstoffhaltigen Materialien als einzige Behandlungsstufe zur Erzielung von Faserfreiheit nicht ausreichend ist und deshalb weitere Behandlungsschritte erforderlich seien. Deshalb schlägt auch die WO 93/18867 A1 vor, das Vermahlen in Gegenwart wenigstens eines in Wasser Hydroxylionen freisetzenden Stoffs bei hohem Druck in wäßriger Suspension vorzunehmen, also neben den Mahlkräften zusätzlichen Druck und eine Lauge auf das aufzubereitende Gut einwirken zu lassen.

Der Erfindung liegt deshalb in weiterer Ausbildung und Verbesserung des Gegenstands der DE-PS 43 32 031 die Aufgabe zugrunde, die Aufbereitung faserstoffhaltiger Materialien zu vereinfachen, ohne Einbußen hinsichtlich der Faserfreiheit hinnehmen zu müssen und ein lagerfähiges, als Baustoff wiederverwertbares Produkt zu erhalten.

Gelöst wird diese Aufgabe dadurch, daß man das aufzubereitende Material in einer Exzenter-Schwingmühle trocken vermahlt.

Die Mahldauer kann verkürzt werden, wenn Fasern oder faserhaltige Materialien zunächst kaltversprödet werden. Dies ist insbesondere vorteilhaft bei Ausgangsmaterialien mit einem Fasergehalt größer als 70 %. Bei der Aufarbeitung von festgebundenen Materialien ist eine Vorzerkleinerung vorteilhaft.

Es war überraschend, daß das Mahlen in einer Exzenter-Schwingmühle bereits zu einem faserfreien Produkt führt, obwohl der Stand der Technik die Kombination mehrerer Behandlungsschritte als zwingend vorsah.

Das erfindungsgemäße Verfahren eignet sich beispielsweise zur Aufbereitung aller Arten von Asbestzement, Spritzasbest und anderen asbestfaser- oder mineralfaserhaltigen Materialien.

Ein wesentlicher Vorteil des erfindungsgemäß erzeugten trockenen, faserfreien Pulvers ist, daß dieses gelagert werden kann und nicht unmittelbar einer Weiterverarbeitung zugeführt werden muß. Nach Zugabe von Wasser, Formung und Abbinden des Verfahrensprodukts werden Formlinge großer Druckfestigkeit erhalten, die sich sehr gut als Baumaterial eignen. Übliche Additive auf dem Baustoffsektor können dem erfindungsgemäß erhaltenen Material zugefügt werden, um dessen Eigenschaften zu modifizieren.

Zur Durchführung des erfindungsgemäßen Verfahrens wird das Gut in eine Exzenter-Schwingmühle eingebracht. Diese zeichnet sich im Gegensatz zu herkömmlichen Schwingmühlen durch eine neuartige exzentrische Schwingungserregung aus, dadurch werden Kreis-, Elipsen- und Linearschwingungen erzeugt, durch die das Fasermaterial in gleicher Weise wie im Fliehkraftreaktor zu einem faserfreien Pulver zerrieben wird.

Der Anteil der Linearschwingungen bewirkt eine Erhöhung der Umlaufgeschwindigkeit des aufzubereitenden Guts und der Mahlkörper gegenüber kreisschwingenden Schwingmühlen um annähernd den Faktor 4, so daß neben der Erhöhung der Normalstoßkraft vor allem eine Erhöhung der Reibstoßkraft zu verzeichnen ist.
Figur 1 zeigt schematisch die Bewegungen des aufzubereitenden Guts und der Mahlkugeln in der Exzenter-Schwingmühle,
Figur 2 zeigt eine Seitenansicht der Mühle und
Figur 3 zeigt eine Schnittansicht gemäß der Linie A-B in Figur 2.

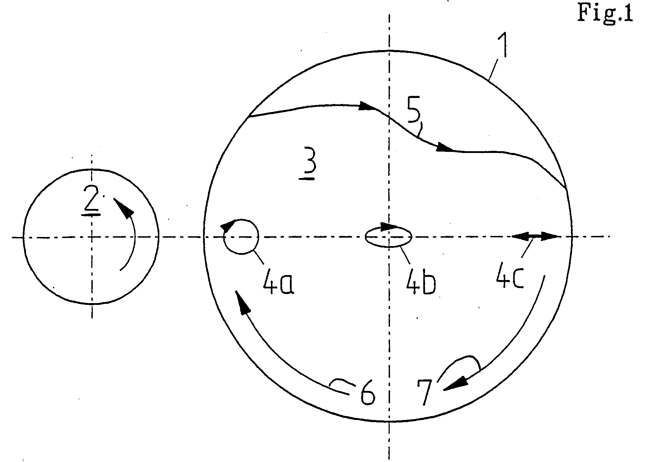

In Fig. 1 wird ein auf (nicht dargestellten) Schwingelementen gelagertes Mahlrohr 1 durch einen auf der linken Seite außerhalb der Schwerkraftachse angeordneten, linksumlaufenden Erreger 2 in Schwingungen versetzt. Infolge der einseitigen Erregung führt das Mahlrohr nur erregerseitig Kreisschwingungen (Pfeil 4a) aus, die über Elipsenschwingungen (Pfeil 4b) im Zentrum in Linearschwingungen (Pfeil 4c) auf die dem Erreger 2 gegenüber liegenden Seite des Mahlrohrs übergehen.

Bei linksumlaufendem Erreger 2 wird die durch das Bezugszeichen 3 erläuterte Mühlenfüllung in Rechtsdrehung (Pfeil 5) versetzt. Dabei führt die Mühlenfüllung erregerseitig eine Aufwärtsbewegung (Pfeil 6) und auf der dem Erreger gegenüberliegenden Seite eine Abwärtsbewegung (Pfeil 7) aus. Während die Kreisschwingung (4a) erregerseitig die Umlaufrichtung 5 der Mühlenfüllung 3 bestimmt, wird ihr durch die Linearschwingungen 4c auf der dem Erreger 2 gegenüberliegenden Seite eine zusätzliche Beschleunigung erteilt, so daß die Umlaufgeschwindigkeit um etwa den Faktor 4 höher liegt als bei herkömmlichen, kreisschwingenden Schwingmühlen. Der Abstand der zur Achse des Mahlbehälters parallelen Achse des Erregers soll dazu größer sein als der kleinste Abstand vom Mahlbehältermittelpunkt zur Mahlbehälterinnenwand.

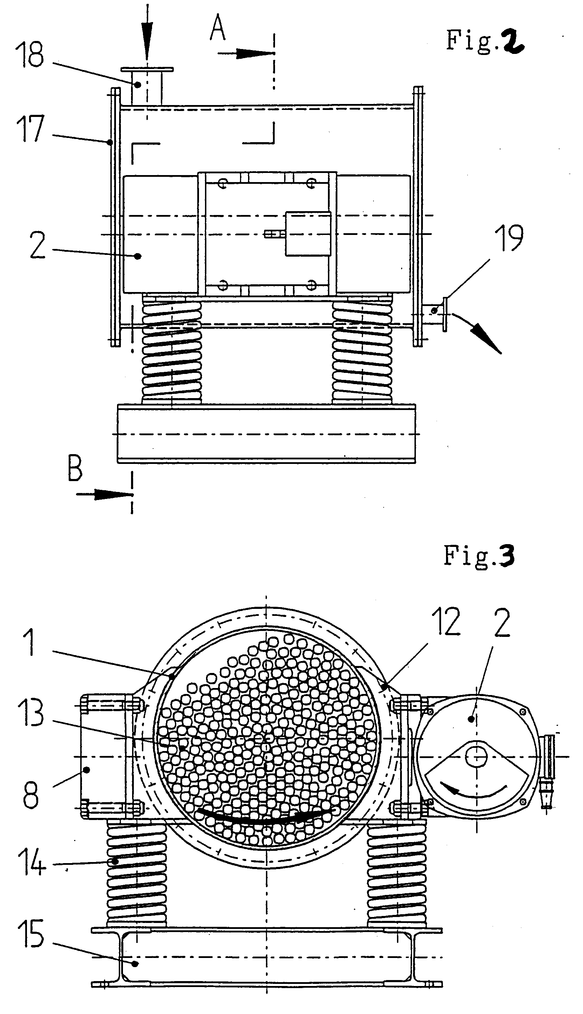

Bei der in den Figuren 2 und 3 dargestellten Exzenter-Schwingmühle ist ein Mahlbehälter in Form eines Mahlrohrs 1 mittels Schwingelementen 14 schwingungsfähig auf einem Grundrahmen 15 abgestützt. An dem Mahlrohr 1 ist rechts mittels einer Quertraverse 12 eine Erregereinheit in Form eines Unwurtmotors 2 starr befestigt. An der Quertraverse ist dem Unwurtmotor 2 achsparallel gegenüberliegend die Ausgleichsmasse 8 ebenfalls starr befestigt. Innerhalb des Mahlrohrs 1 befinden sich in üblicher Weise Mahlkörper 13; dargestellt sind die Bewegungsvorgänge bei Rechtslauf. In Figur 2 sind die Stirnwand 17 des Mahlbehälters sowie der Mahlguteinlauf 18 und der Mahlgutauslauf 19 dargestellt.

Die Erfindung wird durch die folgenden Beispiele erläutert.

### Beispiel 1

Eine Exzenter-Schwingmühle wurde mit 50 kg zerkleinertem Spritzasbestabfall mit einem Asbestanteil von 70 % beschickt. Das Mahlrohr mit einem Volumen von 180 l enthielt 600 kg Stahlkugeln eines Durchmessers von 30 mm. Die Mühle wurde mit einer Drehzahl von 1000 UpM und einem Schwingkreis von 14 mm betrieben. Der Mahlvorgang dauerte 1 Stunde, die anschließende Untersuchung der Faserkonzentration nach den VDI-Richtlinien 3492 zur "Messung anorganischer faserförmiger Partikel..." verlief negativ.

### Beispiel 2

Die in Beispiel 1 eingesetze Schwingmühle wurde mit 100 kg Asbestzement mit einem Asbestanteil von 10 % in gleicher Weise wie in Beispiel 1 nach Vorzerkleinerung beschickt. Das Vermahlen dauerte 0,5 Stunden. Die Faserkontrolle nach den VDI-Richtlinien 3492 verlief negativ.

### Beispiel 3

Ein Asbestzement mit einem Faseranteil von 10 % und Zuschlagstoffen von 10 % wurde in einer Exzenter-Schwingmühle vermahlen und zur Prüfung des Erstarrens ein Pulver/Wassergemisch in Anlehnung an DIN 1164 mit Normsteife hergestellt. Die Normsteife nach DIN 1164 wurde bei einem Wasserpulverfaktor = W/P von 0,25 erreicht.

Der Erstarrungsbeginn wurde mit einem Nadelgerät mit Nadeln nach DIN 1164 geprüft und ergab einen Zeitraum von 50 min.

Das Erstarrungsende war nach weiteren 20 min., insgesamt also nach 70 min. erreicht. Aus diesem Ergebnis ist ersichtlich, daß das durch Trockenvermahlung gewonnene Material hydraulische Faktoren besitzt.

Zur Prüfung der Festigkeit-Druckfestigkeit wurden entsprechend DIN EN 196 Teil 1 Mischungen von Mahlgut und Wasser in einem Verhältnis von 0,5 hergestellt und prismenförmige Prüfkörper mit den Maßen 40 x 40 x 160 mm gefertigt. Das Mischen erfolgte maschinell, ebenso wie die Verdichtung über einen Schocktisch.

Die Prüfkörper wurden 24 Stunden in den Formen in feuchter Luft und bis zur Prüfung in Wasser gelagert. Nach drei Tagen wurde eine Druckfestigkeit von 6,3 N/mm² ermittelt. Die 7-Tage-Druckfestigkeit betrug 8,7 N/mm², der Blain-Wert nach DIN 1164 im Originalmaterial 5500 cm²/g und nach dreißigminütigem Glühen bei 600 °C 5400 cm²/g.

Die durchgeführten Versuche zeigen, daß das aus Asbestzementplatten durch Mahlen in der Exzenter-Schwingmühle hergestellte hochfeine Pulver deutlich hydraulisch reagiert und überraschend hohe Druckfestigkeitswerte bringt.

## Patentansprüche

1. Verfahren zur Aufbereitung von natürlichen und/oder synthetischen, anorganischen oder organischen Faserstoffen und faserstoffhaltigen Materialien zu faserfreien Pulvern durch Vermahlen, dadurch gekennzeichnet, daß man das aufzubereitende Material in einer Exzenter-Schwingmühle trocken vermahlt.

2. Verfahren nach Anspruch 1, dadurch gekennzeichnet, daß man das aufzubereitende Material einer Kaltversprödung unterzieht.

3. Baustoff, erhältlich nach dem Verfahren nach Anspruch 1 oder 2.

4. Baustoff nach Anspruch 3, dadurch gekennzeichnet, daß dem Verfahrensprodukt aus Anspruch 1 oder 2 übliche Baustoffadditive wie Verflüssiger, Erstarrungsverzögerer, Erstarrungsbeschleuniger, Luftporenbildner, Dichtungsmittel und Zuschlagstoffe wie Sand, Kies und Splitt sowie gegebenenfalls Zement zugefügt sind.
